# EUROPÄISCHE PATENTSCHRIFT

(11) **EP 3 068 653 B1**
(45) Veröffentlichungstag und Bekanntmachung des Hinweises auf die Patenterteilung: **30.08.2017**
(21) Anmeldenummer: 14784062.3
(22) Anmeldetag: 14.10.2014
(51) Int. Cl.: B60K 35/00, F16H 59/02, F16H 63/42, G02F 1/1335, G09F 13/04, H01L 25/13, B60Q 3/62, B60Q 3/14

(54) **VORRICHTUNG ZUR ANZEIGE ZUMINDEST EINES SYMBOLS UND VERFAHREN ZUM HERSTELLEN EINER VORRICHTUNG ZUR ANZEIGE ZUMINDEST EINES SYMBOLS**
DEVICE FOR DISPLAYING AT LEAST ONE SYMBOL AND METHOD FOR PRODUCING A DEVICE FOR DISPLAYING AT LEAST ONE SYMBOL
DISPOSITIF D'AFFICHAGE D'AU MOINS UN SYMBOLE, ET PROCÉDÉ DE FABRICATION D'UN DISPOSITIF D'AFFICHAGE D'AU MOINS UN SYMBOLE

(30) Priorität: 14.11.2013 DE 102013223244
(43) Veröffentlichungstag der Anmeldung: 21.09.2016
(73) Patentinhaber: ZF Friedrichshafen AG, 88046 Friedrichshafen (DE)
(72) Erfinder: KIRILENKO, Alexander, 49356 Diepholz (DE); STRAßBURG, Karsten, 30167 Hannover (DE)
(86) Internationale Anmeldenummer: PCT/EP2014/071935
(87) Internationale Veröffentlichungsnummer: WO 2015/071036

(56) Entgegenhaltungen:
- DE-A1- 10 250 675
- DE-A1- 19 654 418
- DE-A1-102004 009 208

## Beschreibung

Die vorliegende Erfindung bezieht sich auf eine Vorrichtung für ein Fahrzeug zur Anzeige zumindest eines Symbols, auf eine Schaltvorrichtung zum Schalten eines Fahrzeuggetriebes und auf ein Verfahren zum Herstellen einer Vorrichtung für ein Fahrzeug zur Anzeige zumindest eines Symbols.

Eine Anzeigevorrichtung kann beispielsweise in einem Fahrzeug eingesetzt werden, um einem Fahrer durch ein leuchtendes Symbol eine aktuelle Betriebsstufe des Fahrzeugs anzuzeigen.

Die DE 10 2004 009 208 A1 beschreibt ein entsprechendes Beleuchtungssystem für Anzeigen in Fahrzeugen und ein Verfahren zum Herstellen eines solchen Systems entsprechend dem Oberbegriff der unabhängigen Ansprüche. Die DE19654418A1 offenbart eine Anzeigeeinheit mit einem durchleuchtbaren Anzeigeelement, auf dessen Rückseite eine Lichtquelle angeordnet ist. Zwischen der Lichtquelle und dem Anzeigeelement ist ein Diffusor angeordnet. Zwischen der Lichtquelle und dem Anzeigeelement ist ein lichtklares Element angeordnet, und zwischen dem Diffusor und dem lichtklaren Element ist ein Luftspalt angeordnet.

Vor diesem Hintergrund schafft die vorliegende Erfindung eine verbesserte Vorrichtung für ein Fahrzeug zur Anzeige zumindest eines Symbols, eine Schaltvorrichtung zum Schalten eines Fahrzeuggetriebes, ein Verfahren zum Herstellen einer Vorrichtung für ein Fahrzeug zur Anzeige zumindest eines Symbols und ein Verfahren zur Anzeige zumindest eines Symbols gemäß den Hauptansprüchen. Vorteilhafte Ausgestaltungen ergeben sich aus den Unteransprüchen und der nachfolgenden Beschreibung.

Ein von einer Vorrichtung anzuzeigendes Symbol kann durch Ausleuchten einer Symbolfläche mit diffusem Licht angezeigt werden. Das diffuse Licht kann unter Verwendung eines Diffusorelements durch eine Hintergrundbeleuchtung bereitgestellt werden. Um unerwünschte Lichteffekte zu vermeiden, kann ein Spalt zwischen der Symbolfläche und dem Diffusorelement vorgesehen werden. Gemäß einer Ausführungsform kann das Diffusorelement so ausgeführt sein, dass das Symbol auch bei ausgeschalteter Hintergrundbeleuchtung für einen Betrachter erkennbar ist.

Eine Vorrichtung für ein Fahrzeug zur Anzeige zumindest eines Symbols weist die folgenden Merkmale auf:
eine lichtdurchlässige Kunststoffschicht mit einer lichtundurchlässigen Beschichtung, wobei eine Symbolfläche für ein von der Vorrichtung anzuzeigendes Symbol von der lichtundurchlässigen Beschichtung ausgespart ist;
eine lichtundurchlässige Zwischenkomponente, die außerhalb der Symbolfläche und die Symbolfläche umgebend auf die lichtundurchlässige Beschichtung aufgebracht ist und einen an die Symbolfläche angrenzenden Lichtschacht bildet; und
ein Diffusorelement, das innerhalb des Lichtschachts und durch einen Spalt beabstandet zu der Symbolfläche angeordnet ist und ausgebildet ist, um auf das Diffusorelement einfallendes Licht in ein diffuses Licht zum Ausleuchten der Symbolfläche zu wandeln.

Die Vorrichtung kann beispielsweise für einen Schaltknauf für eine Schaltvorrichtung für ein Getriebe für ein Fahrzeug eingesetzt werden. Die Vorrichtung kann verwendet werden, um ein oder eine Mehrzahl von Symbolen anzuzeigen. Ein Symbol kann beispielsweise eine Ziffer, ein Buchstabe oder ein Piktogramm sein. Im Betrieb der Vorrichtung kann ein solches Symbol durch eine Hintergrundbeleuchtung beleuchtet sein. Die lichtdurchlässige Kunststoffschicht kann farblos ausgeführt sein. Die lichtdurchlässige Kunststoffschicht kann eine oder mehrere Schichten umfassen. Die lichtdurchlässige Kunststoffschicht kann eine Hartstoffbeschichtung oder eine Beschichtung zum Ausbilden eines Tiefeneffekts umfassen. Die Kunststoffschicht kann eine äußere Oberfläche der Vorrichtung bilden und somit Umwelteinflüssen ausgesetzt sein. Die lichtundurchlässige Beschichtung kann beispielsweise eine schwarze oder dunkle Farbschicht sein, die auf die Kunststoffschicht aufgebracht ist. Die Symbolfläche kann einer Fläche des von der Vorrichtung anzuzeigenden Symbols entsprechen. Im Bereich der Symbolfläche kann die lichtundurchlässige Beschichtung der Kunststoffschicht entfernt worden sein. Alternativ kann die Symbolfläche beim Aufbringen der lichtundurchlässigen Beschichtung auf die Kunststoffschicht ausgespart worden sein. Somit kann die Symbolfläche einen Bereich der Kunststoffschicht bezeichnen, der nicht durch die lichtundurchlässige Beschichtung abgedeckt ist. Die lichtundurchlässige Zwischenkomponente kann ausgebildet sein, um Überstahleffekte zu verhindern. Ferner kann die Zwischenkomponente ausgebildet sein, um die Kunststoffschicht zu stabilisieren. Der Lichtschacht kann als ein zylinderförmiger Raum ausgeführt sein, der auf einer Seite durch die Kunststoffschicht abgeschlossen ist. Das Diffusorelement kann ein Kunststoffelement sein. Eine der Kunststoffschicht zugewandte Oberfläche des Diffusorelements kann durch den Spalt von der lichtundurchlässigen Beschichtung und im Bereich der Symbolfläche von der Kunststoffschicht getrennt sein. Eine Dicke des Spalts kann beispielsweise kleiner als ein Zehntel einer Dicke des Diffusorelements sein. Das auf das Diffusorelement einfallende Licht kann von einem Leuchtmittel, beispielsweise einer Leuchtdiode erzeugt werden. Das einfallende Licht kann von einer der Kunststoffschicht abgewandten Seite in das Diffusorelement eingekoppelt werden, durch eine Materialbeschaffenheit des Diffusorelements diffusiert, also beispielsweise gestreut werden, und als diffuses Licht aus einer der Kunststoffschicht zugewandten Oberfläche des Diffusorelements ausgekoppelt, in den Spalt eingekoppelt und aus dem Spalt in die Symbolfläche eingekoppelt werden. Beispielsweise kann das Diffusorelement Streulichtpartikel zum Wandeln des einfallenden Lichts in das diffuse Licht aufweisen.

Der Spalt zwischen dem Diffusorelement und der Symbolfläche kann mit einem Medium gefüllt sein, das ein Übertreten von innerhalb der lichtdurchlässigen Kunststoffschicht total reflektiertem Licht in den Spalt verhindert. Das Medium kann beispielsweise ein Gas oder ein Vakuum sein. Auf diese Weise kann vermieden werden, dass sich innerhalb der Kunststoffschicht ausbreitende Lichtstrahlen auf das Diffusorelement treffen und dadurch unerwünschte Lichteffekte an der Symbolfläche hervorrufen.

Beispielsweise kann der Spalt mit Luft gefüllt sein. Dies ist kostengünstig zu realisieren.

Das Diffusorelement kann Farbmittel umfassen. Durch die Farbmittel kann eine Lichtfarbe des von dem Diffusorelement abgestrahlten diffusen Lichts eingestellt werden. Die Lichtfarbe kenn eine Farbe darstellen, in der das Symbol für einen Betrachter der Vorrichtung erscheint. Somit kann für die Kunststoffschicht eine farblose Folie verwendet werden und es ist keine farbige Zwischenschicht zwischen dem Diffusorelement und der Symbolfläche erforderlich.

Die lichtdurchlässige Kunststoffschicht kann aus einem synthetischen Polymer oder einem thermoplastischen Kunststoff hergestellt sein. Eine solche Folie eignet sich auch zur Realisierung gebogener Symbolflächen. Die Kunststoffschicht kann eine vorgehärtete oder ausgehärtete Lackschicht als Hartstoffbeschichtung aufweisen. Eine solche Lackschicht kann sehr dünn ausgeführt werden und dennoch eine sehr hohe Kratzfestigkeit aufweisen.

Die lichtundurchlässige Beschichtung kann eine dunkle, beispielsweise schwarze Lackschicht sein, die auf die Kunststoffschicht aufgebracht ist. Durch eine solche Lachschicht kann zuverlässig eine Abstrahlung von Licht außerhalb der Symbolfläche verhindert werden.

Das Diffusorelement kann nicht-erfindungsgemäß als ein als Ganzes in den Lichtschacht eingeführtes Element ausgeführt sein. Beispielsweise kann das Diffusorelement als ein kleiner Klotz aus, beispielsweise gespritztem Kunststoff sein, der an die Kunststoffschicht oder die lichtundurchlässige Beschichtung der Kunststoffschicht geknipst oder gedrückt ist. Ein solches Element kann beispielsweise durch eine kraftschlüssige oder formschlüssige Verbindung in dem Lichtschacht befestigt werden. Eine solche Verbindung kann einfach hergestellt werden. Erfindungsgemäß ist des Diffusorelement als ein Element ausgeführt, das aus auf die Symbolfläche in den Lichtschacht eingespritztem Material hergestellt ist. Dabei kann das Material eine Eigenschaft aufweisen, die beim Aushärten des Materials zu einer dauerhaften Haftung des Materials an der Zwischenkomponente und zum Ausbilden des Spalts zu einer schwindenden Haftung an der Symbolfläche führt. Auf diese Weise kann das Diffusorelement stoffschlüssig in dem Lichtschacht befestigt werden. Zudem kann der Spalt sehr schmal ausgeführt werden.

Die Vorrichtung kann ein Leuchtmittel zum Ausstrahlen des auf das Diffusorelement einfallenden Lichts umfassen. Das Leuchtmittel kann auf einer der Kunststoffschicht abgewandten Seite des Diffusorelements angeordnet sein. Das Leuchtmittel kann ausgebildet sein, um Licht in einem für den Menschen sichtbaren Spektralbereich auszustrahlen. Bei dem Licht kann es sich um weißes Licht oder um Licht mit einer von weiß abweichenden Farbe handeln. Das Leuchtmittel kann in dem Lichtschacht oder einer Öffnung des Lichtschachts gegenüberliegend angeordnet sein.

Gemäß einer Ausführungsform der Vorrichtung kann eine weitere Symbolfläche für ein weiteres anzuzeigendes Symbol von der lichtundurchlässigen Beschichtung ausgespart sein. Die lichtundurchlässige Zwischenkomponente kann außerhalb der weiteren Symbolfläche und die weitere Symbolfläche umgebend auf die lichtundurchlässige Beschichtung aufgebracht sein und einen an die weitere Symbolfläche angrenzenden weiteren Lichtschacht bilden. Ein weiteres Diffusorelement kann innerhalb des weiteren Lichtschachts und durch einen weiteren Spalt beabstandet zu der weiteren Symbolfläche angeordnet und ausgebildet sein, um auf das weitere Diffusorelement einfallendes Licht in ein diffuses Licht zum Ausleuchten der weiteren Symbolfläche zu wandeln. Der Lichtschacht und der weitere Lichtschacht können benachbart zueinander und getrennt durch eine von der Zwischenkomponente gebildeten Wand angeordnet sein. Auf diese Weise können nebeneinander zwei Symbole angezeigt werden. Dieser Ansatz kann in entsprechender Weise auf weitere Symbole erweitert werden.

Die Vorrichtung kann beispielsweise im Zusammenhang mit einer Schaltvorrichtung zum Schalten eines Fahrzeuggetriebes für ein Fahrzeug eingesetzt werden. Eine entsprechende Schaltvorrichtung zum Schalten eines Fahrzeuggetriebes kann eine entsprechende Vorrichtung, beispielsweise zum Anzeigen einer eingestellten Betriebsstufe des Fahrzeuggetriebes aufweisen. Die Vorrichtung kann mit einer geringen Gesamtdicke realisiert werden und eignet sich dadurch besonders für den Einsatz bei einer Schaltvorrichtung.

Ein Verfahren zum Herstellen einer Vorrichtung für ein Fahrzeug zur Anzeige zumindest eines Symbols umfasst die folgenden Schritte:
Bereitstellen einer Anordnung aus einer lichtdurchlässigen Kunststoffschicht mit einer lichtundurchlässigen Beschichtung, wobei eine Symbolfläche für ein von der Vorrichtung anzuzeigendes Symbol von der lichtundurchlässigen Beschichtung ausgespart ist sowie einer lichtundurchlässigen Zwischenkomponente, die außerhalb der Symbolfläche und die Symbolfläche umgebend auf der lichtundurchlässigen Beschichtung angeordnet ist, und einen an die Symbolfläche angrenzenden Lichtschacht bildet; und
Anordnen eines Diffusorelements innerhalb des Lichtschachts und durch einen Spalt beabstandet zu der Symbolfläche, wobei das Diffusorelement ausgebildet ist, um auf das Diffusorelement einfallendes Licht in ein diffuses Licht zum Ausleuchten der Symbolfläche zu wandeln.

Der Schritt des Anordnens kann auf unterschiedliche Weise ausgeführt werden, beispielsweise abhängig davon, ob das Diffusorelement als ein Fertigteil in den Lichtschacht eingesetzt wird oder erst innerhalb des Lichtschachts ausgeformt wird.

Beispielsweise kann im Schritt des Anordnens Material zum Ausbilden des Diffusorelements auf die Symbolfläche in den Lichtschacht gespritzt werden, wobei das Material eine Eigenschaft aufweist, die beim Aushärten des Materials zu einer dauerhaften Haftung des Materials an der Zwischenkomponente und zum Ausbilden des Spalts zu einer schwindenden Haftung an der Symbolfläche führt.

Ein Verfahren zur Anzeige zumindest eines Symbols umfasst die folgenden Schritte:
Wandeln von auf ein in einem Lichtschacht angeordnetes Diffusorelement einfallenden Lichts in ein diffuses Licht; und
Leiten des diffusen Lichts durch einen Spalt auf eine Symbolfläche, die von einer lichtundurchlässigen Beschichtung einer lichtdurchlässigen Kunststoffschicht ausgespart ist, um das Symbol anzuzeigen.

Die Schritte des Verfahrens können beispielsweise unter Verwendung von Einrichtungen einer genanten Vorrichtung ausgeführt werden.

Die Erfindung wird anhand der beigefügten Zeichnungen beispielhaft näher erläutert. Es zeigen:
- Fig. 1: eine schematische Darstellung eines Fahrzeugs mit einer Vorrichtung zur Anzeige zumindest eines Symbols;
- Fig. 2: eine schematische Darstellung einer Vorrichtung zur Anzeige zumindest eines Symbols;
- Fig. 3: eine Draufsicht auf eine Vorrichtung zur Anzeige zumindest eines Symbols;
- Fig. 4: eine schematische Darstellung einer Vorrichtung zur Anzeige zumindest eines Symbols;
- Fig. 5: eine schematische Darstellung einer Vorrichtung zur Anzeige zumindest eines Symbols;
- Fig. 6: ein Ablaufdiagramm eines Verfahrens zum Herstellen einer Vorrichtung; und
- Fig. 7: ein Ablaufdiagramm eines Verfahrens zum Anzeigen zumindest eines Symbols.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

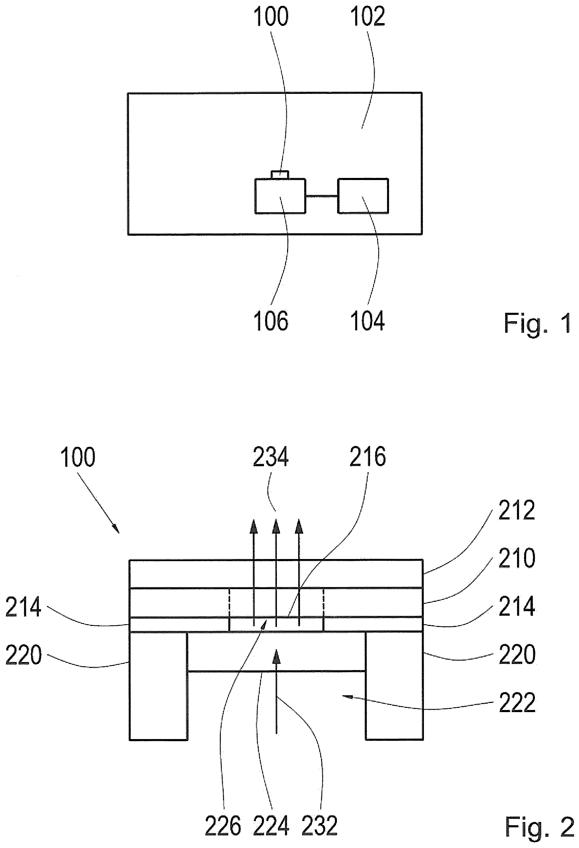

Fig. 1 zeigt eine schematische Darstellung einer Vorrichtung 100 zur Anzeige zumindest eines Symbols gemäß einem Ausführungsbeispiel der vorliegenden Erfindung. Beispielhaft ist die Vorrichtung 100 in einem Fahrzeug 102, beispielsweise einem Personenkraftwagen angeordnet. Das Fahrzeug 102 weist ein Getriebe 104 und eine Schaltvorrichtung 106 zum Schalten des Getriebes 104 auf. Über die Schaltvorrichtung 106 kann ein Fahrer des Fahrzeugs 102 unterschiedliche Betriebsstufen, beispielsweise unterschiedliche Gänge oder unterschiedliche Betriebsmodi des Getriebes 104 oder des Fahrzeugs 102 einstellen. Die Vorrichtung 100 ist ausgebildet, um die einstellbaren Betriebsstufen dem Fahrer mittels Symbolen anzuzeigen. Beispielsweise kann die Vorrichtung 100 dazu an einem Schalthebel der Schaltvorrichtung 106 angeordnet sein. Zum Einstellen einer Betriebsstufe kann der Fahrer beispielsweise den Schalthebel in eine der Betriebsstufe zugeordnete Schaltgasse führen.

Gemäß einem Ausführungsbeispiel ist die Vorrichtung 100 als eine Mehrkomponenten-Symboleinlage oder als ein Mehrkomponenten-Display ausgeführt. Die Vorrichtung 100 kann als ausleuchtbare Komponente, beispielsweise an einer Schaltung, beispielsweise im Schaltknauf genutzt werden, um beispielsweise die eingelegte Schaltgasse (P, R, N, D / S, +, -, etc.) anzuzeigen.

Die Vorrichtung 100 kann auch im Zusammenhang mit anderen Komponenten eines Fahrzeugs 102 verwendet werden. Ferner kann die Vorrichtung 100 auch für Anwendungen außerhalb des Fahrzeugbereichs, beispielsweise in der Gebäudetechnik, eingesetzt werden.

Fig. 2 zeigt eine schematische Darstellung einer Vorrichtung 100 zur Anzeige zumindest eines Symbols gemäß einem Ausführungsbeispiel der vorliegenden Erfindung. Die Vorrichtung 100 ist in einer Querschnittsdarstellung gezeigt. Die Vorrichtung 100 ist ausgebildet, um ein Symbol anzuzeigen. Die Vorrichtung 100 kann erweitert werden, um mehrere Symbole anzuzeigen, beispielsweise, wie anhand von Fig. 1 beschrieben, mehrere Symbole zur Anzeige unterschiedlicher Schaltgassen einer Schaltung.

Die Vorrichtung 100 weist eine lichtdurchlässige Kunststoffschicht 210 auf. Optional weist die Kunststoffschicht 210 auf einer Seite, die eine für einen Betrachter der Vorrichtung 100 sichtbare Oberfläche der Vorrichtung 100 darstellt, eine Hartstoffbeschichtung 212 auf, durch die die Vorrichtung 100 vor Beschädigungen, beispielsweise vor Kratzern, geschützt werden kann. Die Hartstoffbeschichtung 212 kann eine Dicke aufweisen, die einen Tiefeneffekt des anzuzeigenden Symbols bewirkt. Auf einer Rückseite, also einer dem Betrachter abgewandten Seite weist die Kunststoffschicht 210 eine lichtundurchlässige Beschichtung 214 auf. Die lichtundurchlässige Beschichtung 214 ist nicht vollflächig ausgeführt, sondern weist im Bereich einer Symbolfläche 216 der Kunststoffschicht 210 eine Aussparung auf. Die Symbolfläche 216 definiert ein von der Vorrichtung 100 anzuzeigendes Symbol. Die Kunststoffschicht 210 und somit die Symbolfläche 216 sind gemäß diesem Ausführungsbeispiel farblos und transparent.

Auf die lichtundurchlässige Beschichtung 214 ist eine lichtundurchlässige Zwischenkomponente 220 aufgebracht. Dabei ist die Zwischenkomponente 220 außerhalb der Symbolfläche 216 angeordnet und umgibt die Symbolfläche 216 ringförmig. Auf diese Weise wird durch eine umlaufende Wand der Zwischenkomponente 220 ein an die Symbolfläche 216 angrenzender Lichtschacht 222 geschaffen. Der Lichtschacht 222 kann zylinderförmig sein. Den Lichtschacht 222 bildende Wände der Zwischenkomponente 220 können quer zu der Kunststoffschicht 210 ausgerichtet sein. Eine Längserstreckungsachse des Lichtschachts 222 kann senkrecht zu der Symbolfläche 216 ausgerichtet sein.

Innerhalb des Lichtschachts 222 ist ein Diffusorelement 224 angeordnet. Das Diffusorelement 224 ist gemäß diesem Ausführungsbeispiel in direktem Kontakt mit einer angrenzenden Oberfläche der lichtundurchlässigen Beschichtung 214 angeordnet, ist jedoch von der Symbolfläche 216 der Kunststoffschicht 210 durch einen Spalt 226 getrennt. Gemäß einem alternativen Ausführungsbeispiel erstreckt sich der Spalt 226 zusätzlich zwischen dem Diffusorelement 224 und der lichtundurchlässigen Beschichtung 214.

Somit befindet sich der Spalt 226 zwischen dem Diffusorelement 224 sowie der lichtundurchlässigen Beschichtung 214 und der Symbolfläche 216 oder zumindest zwischen dem Diffusorelement 224 und der Symbolfläche 216. Der Spalt 226 kann beispielsweise als ein Luftspalt ausgeführt sein, der vollständig mit Luft ausgefüllt ist. Insbesondere kann sich keine farbgebende Schicht zwischen dem Diffusorelement 224 und der Leuchtfläche 216 befinden.

Gemäß diesem Ausführungsbeispiel erstreckt sich das Diffusorelement 224 vollständig zwischen den den Lichtschacht 222 bildenden Wänden der Zwischenkomponente 220 und grenzt an die Wände an. Gemäß diesem Ausführungsbeispiel wird der Lichtschacht 222 in Längsrichtung nicht vollständig durch das Diffusorelement 224 ausgefüllt.

Licht 232, das von einer der Kunststoffschicht 210 gegenüberliegenden Seite des Diffusorelements 224 auf das Diffusorelement 224 trifft, wird in das Diffusorelement 224 eingekoppelt, von dem Diffusorelement 224 gestreut oder aufgefächert. Zumindest ein Teil des Lichts 232 wird als diffuses Licht 234 in Richtung der Symbolfläche 216 aus dem Diffusorelement 224 ausgekoppelt, um zur Anzeige des Symbols durch den Spalt 226 sowie die Symbolfläche 216 hindurch von der Vorrichtung 100 abgestrahlt zu werden. Das Licht 232 kann von einem geeigneten Leuchtmittel bereitgestellt werden. Ein solches Leuchtmittel kann Teil der Vorrichtung 100 sein oder separat bereitgestellt werden.

Durch das diffuse Licht 234 kann die Symbolfläche 216 in einem Lichtbetriebsmodus der Vorrichtung 100 ausgeleuchtet werden, sodass die Symbolfläche 216 für einen Betrachter der Vorrichtung 100 als eine das Symbol darstellende selbstleuchtende Fläche erscheint.

In einem weiteren Betriebsmodus der Vorrichtung 100 kann kein Licht 232 durch das Diffusorelement 224 auf die Symbolfläche 216 geleitet werden. In diesem Fall kann die Symbolfläche 216 aufgrund von Umgebungslicht als eine das Symbol darstellende Fläche erscheinen. Dabei kann das Symbol für einen Betrachter in einer durch das Diffusorelement 224 vorgegebenen Farbe erscheinen.

Gemäß einem Ausführungsbeispiel weist das Diffusorelement 224 Farbmittel auf, die ausgebildet sind, um die Symbolfläche 216 für den Betrachter farbig erscheinen zu lassen. Die farbige Erscheinung der Symbolfläche 216 kann für einen Betrachter sowohl sichtbar sein, wenn die Symbolfläche 216 durch das Diffusorelement 224 hindurch mit Licht 232 bestrahlt wird, als auch, wenn die Symbolfläche 216 durch Umgebungslicht bestrahlt wird. Die Kunststoffschicht 210 kann farblos oder annähernd farblos sein. Auf diese Weise ist das Diffusorelement 224 durch die Kunststoffschicht 210 hindurch für den Betrachter sichtbar.

Die lichtundurchlässige Beschichtung 214 kann als eine lichtundurchlässige Lackschicht ausgeführt sein. Beispielsweise kann die lichtundurchlässige Beschichtung 214 eine dunkle, beispielsweise schwarze, Lackschicht sein.

Gemäß einem Ausführungsbeispiel ist sowohl die Zwischenkomponente 220 als auch das Diffusorelement 224 durch auf die lichtundurchlässige Beschichtung 214 aufgespritztes Material hergestellt. Alternativ kann das Diffusorelement 224 ein in den Lichtschacht 222 eingeführtes und befestigtes Element darstellen. Dazu kann beispielsweise an dem Diffusorelement 224 oder dem Lichtschacht 222 ein geeignetes Befestigungsmittel vorgesehen sein.

Eine der Kunststoffschicht 210 abgewandte Oberfläche des Diffusorelements 224 kann plan oder strukturiert sein. Eine strukturierte Oberfläche kann beispielsweise eine Wölbung oder Ausbuchtung in Richtung einer Quelle des Lichts 232 aufweisen. Durch eine solche Struktur kann eine Wandlung des Lichts 232 in diffuses Licht 234 verstärkt werden. Zur Wandlung des Lichts 232 in diffuses Licht 234 kann das Diffusorelement 224 Streulichtpartikel oder Streulichtpigmente aufweisen.

Eine entsprechend dem beschriebenen Ansatz ausgeführte Anzeigevorrichtung 100 ermöglicht eine Überstrahlungsvermeidung bei permanent dargestellten, beispielsweise weißen, Symbolen in Anzeigemodulen oder Displays mit Glasoptik und Tiefeneffekt.

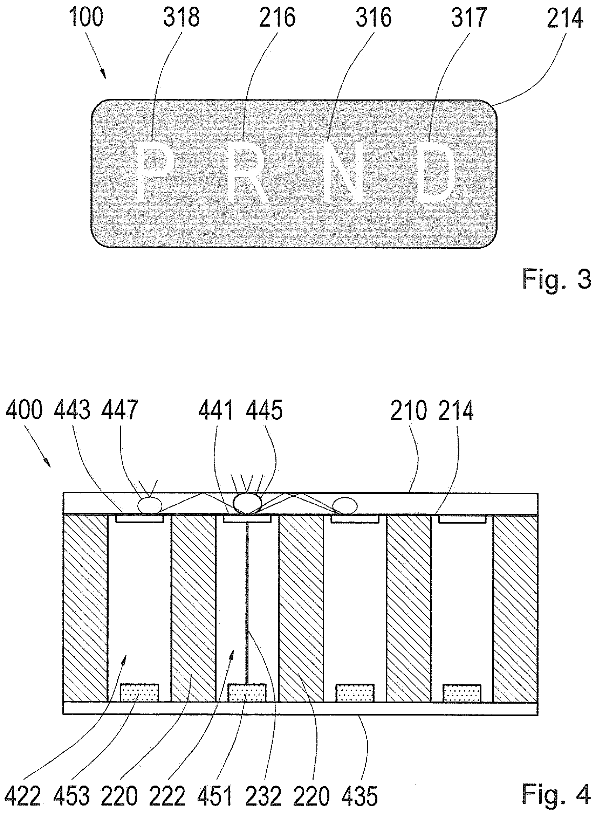

Fig. 3 zeigt eine Draufsicht auf eine Vorrichtung 100 zur Anzeige zumindest eines Symbols gemäß einem Ausführungsbeispiel der vorliegenden Erfindung. Eine für einen Betrachter der Vorrichtung 100 sichtbare Oberfläche der Vorrichtung 100 weist eine im Wesentlichen rechteckige Form mit abgerundeten Ecken auf. Die Vorrichtung 100 ist in einem Zustand ohne Hintergrundbeleuchtung gezeigt.

Die Vorrichtung 100 weist vier anzuzeigende Symbole auf, die durch eine Symbolfläche 216 zum Darstellen eines Symbols "R", eine Symbolfläche 316 zum Darstellen eines Symbols "N", eine Symbolfläche 317 zum Darstellen eines Symbols "D" und eine eine Symbolfläche 318 zum Darstellen eines Symbols "P" gebildet werden.

Für den Betrachter ist die lichtundurchlässige Beschichtung 214 der Vorrichtung 100 als dunkle, hier schwarze Fläche zu erkennen. Von der lichtundurchlässigen Beschichtung 214 sind die Symbolflächen 216, 316, 317, 318 ausgenommen. Durch die die Symbolflächen 216, 316, 317, 318 bildenden Ausnehmungen der lichtundurchlässigen Beschichtung 214 hindurch sind die hellen, hier weißen, Diffusorelemente unter den Symbolflächen 216, 316, 317 zu erkennen.

Alle Symbole, beispielsweise P, R, N, D, können grundausgeleuchtet sein. Wird ein Gang eingelegt, wird dieses durch ein deutlich helleres Aufleuchten einer LED (Spotbeleuchtung) kenntlich gemacht.

Fig. 4 zeigt eine schematische Darstellung einer Vorrichtung 400 zur Anzeige zumindest eines Symbols. Die gezeigte Vorrichtung 400 ist ausgebildet, um vier Symbole anzuzeigen.

Die Vorrichtung 400 weist eine lichtdurchlässige Kunststoffschicht 210 auf, auf deren Unterseite eine lichtundurchlässige Beschichtung 214 angeordnet ist, die im Bereich von Symbolflächen zur Darstellung der Symbole Aussparungen aufweist. Auf einer der Kunststoffschicht 210 abgewandten Oberfläche der lichtundurchlässigen Beschichtung 214 ist eine lichtundurchlässige Zwischenkomponente 220 aufgebracht. Die Zwischenkomponente 220 weist zum Bilden von hier vier Lichtschächte 222, 422, von denen nur die beiden links dargestellten mit Bezugszeichen versehen sind, im Bereich der Symbolflächen je eine Aussparung auf. Die Zwischenkomponente 220 ist zwischen der lichtundurchlässigen Beschichtung 214 und einer Leiterplatte 435 der Vorrichtung 400 angeordnet. Die Symbolflächen sind je von einer Farbschicht 441, 443 überdeckt. In den Lichtschächten 222, 422 ist je ein Leuchtmittel 451, 453 angeordnet. Die Leuchtmittel 451, 453 sind auf der Leiterplatte 435 angeordnet.

Das in dem Lichtschacht 222 angeordnete Leuchtmittel 451 ist im Betrieb gezeigt. Das Leuchtmittel 451 ist ausgebildet, um Licht 232 auszustrahlen. Das Licht 232 trifft auf die Farbschicht 441 und erzeugt innerhalb der Kunststoffschicht 210 eine Abstrahlcharakteristik 445 zur Anzeige eines Symbols. Ein Teil des von der Farbschicht 441 in die Kunststoffschicht 210 übertragenen Lichts 232 wird an einer äußeren Oberfläche der Kunststoffschicht 210 reflektiert und trifft beispielsweise auf die benachbarte Farbschicht 443 des zu dem Lichtschacht 222 benachbart angeordneten Lichtschachts 422, wodurch eine durch das Leuchtmittel 451 des Lichtschachts 222 und nicht durch das Leuchtmittel 453 des Lichtschachts 422 hervorgerufene unerwünschte Abstrahlcharakteristik 447 erzeugt wird.

Gemäß einem Ausführungsbeispiel ist die Kunststoffschicht 210 aus Polymethylmethacrylat (PMMA) oder Polycarbonate (PC) hergestellt. Beispielsweise kann es sich um eine Makrofol®-Folie handel.

Die Farbschichten 443 können als weiße Lackierung ausgeführt sein.

Die Leiterplatte 435 kann als eine Leiterplatte 435 mit Leuchtdioden als Leuchtmittel 451, 453 ausgeführt sein.

Bei Display- und Symboleinlagenanwendungen mit "Tiefeneffekt", bei dem die anzuzeigenden Symbole unterhalb einer PMMA / PC Schicht von meist ca. 1,5mm Dicke dargestellt wird als erstes eine ca. 0,25mm dünne PC-Folie schwarz lackiert, die gewünschten Symbole werden freigelasert und anschließend werden die die Symbole darstellenden Symbolflächen wieder weiß lackiert. Dann wird diese Folie verformt und für die Glasoptik oder den Tiefeneffekt mit einem PMMA überspritzt. Diese Symbole werden dann einzeln jeweils Spot- oder grundausgeleuchtet.

Wird eine Symbolfläche mit einer Spotbeleuchtung dargestellt, so kann diese hellere Beleuchtung in die daneben liegenden weißen Symbole überstrahlen. Dies ergibt sich aus dem Display oder der Symboleinlage. Trifft hier das Licht gerichtet auf die weiß lackierte Symbolik, werden die Lichtstrahlen in einem großen Abstrahlwinkel (lambertsche - Abstrahlcharakteristik) in das darüber liegende PMMA oder PC 210 weiter geleitet. Aufgrund von Totalreflexion, kann das Licht innerhalb dieser "Glasschicht" 210 bis zu den daneben liegenden Symbolen gelangen. Treffen diese bereits etwas abgeschwächten Lichtstrahlen auf die danebenliegenden weißen Symbole, werden diese aufgrund der physikalischen Eigenschaften der weißen Lackierung nahezu lambertsch zurückreflektiert und addieren sich in diesen Bereichen mit der Grundausleuchtung, wie es ihn Fig. 4 gezeigt ist.

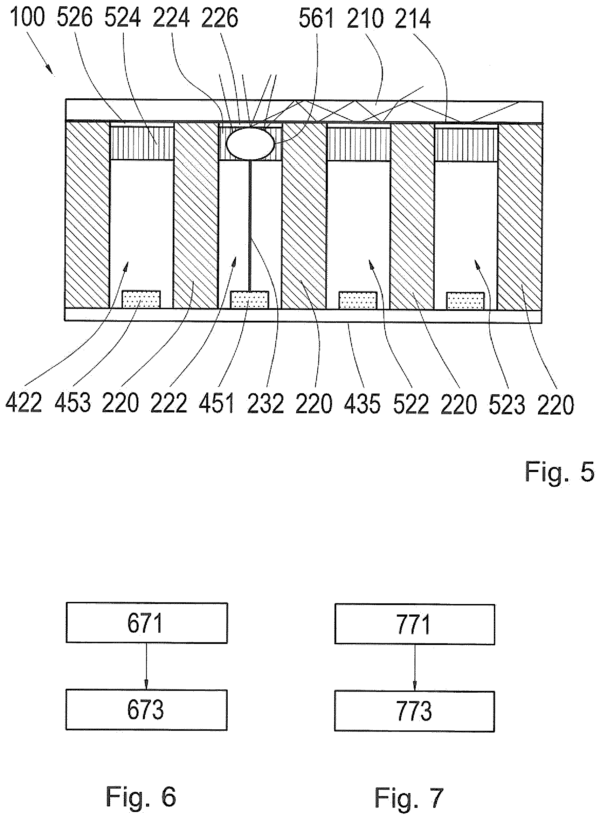

Fig. 5 zeigt eine schematische Darstellung einer Vorrichtung 100 zur Anzeige zumindest eines Symbols gemäß einem Ausführungsbeispiel der vorliegenden Erfindung. Dabei kann es sich um die in Fig. 3 gezeigte Vorrichtung 100 handeln. Ein Aufbau der Vorrichtung 100 entspricht im Wesentlichen dem anhand von Fig. 2 beschrieben Aufbau einer Vorrichtung 100, wobei die die in Fig. 5 gezeigte Vorrichtung 100 vier Symbolflächen zum Anzeigen von vier Symbolen aufweist.

Die Vorrichtung 100 weist eine lichtdurchlässige Kunststoffschicht 210 auf, auf deren Unterseite eine lichtundurchlässige Beschichtung 214 angeordnet ist, die im Bereich von Symbolflächen zur Darstellung der Symbole Aussparungen aufweist. Auf einer der Kunststoffschicht 210 abgewandten Oberfläche der lichtundurchlässigen Beschichtung 214 ist eine lichtundurchlässige Zwischenkomponente 220 aufgebracht. Die Zwischenkomponente 220 weist zum Bilden von hier vier Lichtschächte 222, 422, 522, 523 im Bereich der Symbolflächen je eine Aussparung auf. Die Zwischenkomponente 220 ist zwischen der lichtundurchlässigen Beschichtung 214 und einer Leiterplatte 435 der Vorrichtung 100 angeordnet. In jedem Lichtschacht 222, 422, 522, 523 ist je ein Diffusorelement 224, 524 angeordnet, wobei lediglich die Diffusorelemente 224, 524 der beiden links dargestellten Lichtschächte 222, 422 mit Bezugszeichen versehen sind. Zwischen den Diffusorelementen 224, 524 und der Kunststoffschicht 210 ist je ein Spalt 226, 526 angeordnet.

Zum Realisieren eines Tiefeneffekts kann die Kunststoffschicht 210 eine Kunststofffolie umfasen, die auf einer der lichtundurchlässigen Beschichtung 214 abgewandten Seite eine Schicht aus Kunststoff mit einer den Tiefeneffekt bewirkenden Dicke aufweist.

In den Lichtschächten 222, 422, 522, 523 ist je ein Leuchtmittel 451, 453 angeordnet, wobei lediglich die Leuchtmittel 451, 453 der beiden links dargestellten Lichtschächte 222, 422 mit Bezugszeichen versehen sind. Die Leuchtmittel 451, 453 sind auf der Leiterplatte 435 angeordnet.

Das in dem Lichtschacht 222 angeordnete Leuchtmittel 451 ist im Betrieb gezeigt. Das Leuchtmittel 451 ist ausgebildet, um Licht 232 auszustrahlen. Das Licht 232 trifft auf das Diffusorelement 224 und erzeugt innerhalb des Diffusorelements 224 eine Abstrahlcharakteristik 561 aus diffusem Licht, das über den Spalt 224 und die an den Spalt 224 angrenzende Symbolfläche durch die Kunststoffschicht 210 hindurch für einen Betrachter der Vorrichtung 100 als Symbol erscheint.

Über den Spalt 224 in die Kunststoffschicht 210 übertragenes Licht, das innerhalb der Kunststoffschicht 210 reflektiert wird, kann aufgrund der Spalte 226, 526 zwischen der Kunststoffschicht 210 und den Diffusorelementen 224, 524 keine weitere Abstrahlcharakteristika in weiteren Diffusorelementen 224, 524 ausbilden. Dadurch kann beispielsweise vermieden werden, dass das Licht 232 des Leuchtmittels 451 des Lichtschachts 222 in das Diffusorelement 524 des benachbarten Lichtschachts 422 übertragen wird und über eine dem Diffusorelement 524 gegenüberliegende Symbolfläche für einen Betrachter der Vorrichtung sichtbar ist.

Gemäß einem Ausführungsbeispiel ist die Kunststoffschicht 210 aus Polymethylmethacrylat (PMMA) oder Polycarbonate (PC) hergestellt. Beispielsweise kann es sich um eine Makrofol®-Folie handel. Auch kann anstelle der Kunststoffschicht 210 ein Verbund aus einer PMMA- oder PC-Folie, beispielsweise einer Makrofol®-Folie, und einer darüberliegenden, also eine Außenseite der Vorrichtung 100 bildende, Schicht aus PMMA oder PC eingesetzt werden.

Die Spalte 226, 526 können je als Luftspalt ausgeführt sein.

Die Diffusorelemente 224, 524 können je als eine Farbe aufweisende Diffusoren, beispielsweise als weiße Diffusoren ausgeführt sein.

Die Leuchtmittel 451, 453 können als Leuchtdioden (LEDs) ausgeführt sein. Somit kann es sich bei der Leiterplatte 435 um eine Leiterplatte 435 mit Leuchtdioden 451, 453 handeln.

Die gezeigte Vorrichtung 100 kann beispielsweise für das Anzeigen von eingelegten Gangwahlstufen (P, R, N, D, etc.), beispielsweise an einem Schalthebel eingesetzt werden.

Um zu verhindern, dass durch innere Totalreflexion das durch das Diffusorelement 224 und den Spalt 226 in die Kunststoffschicht 210 eingekoppelte Licht in ein benachbartes Diffusorelement 524, beispielsweise zur Darstellung einer weißen Symbolik gelangt, wird gemäß einem Ausführungsbeispiel zwischen dem farbigen, beispielsweise weißen Material der Diffusorelemente 224, 524 und dem klaren Material (PC / PMMA) der Kunststoffschicht 210 je ein Spalt 226, 526, hier ein Luftspalt, angeordnet. Dies führt dazu, dass das Licht gerichtet durch Totalreflexion weiter geleitet wird, und nicht am farbigen Material der Diffusorelemente 224, 524 lambertsch in Richtung des Beobachters reflektiert wird.

Um dies zu realisieren, wird der beispielsweise frei gelaserte Bereich der Symbolflächen nicht lackiert. Stattdessen wird hier, im Unterschied zu der in Fig. 4 gezeigten Vorrichtung, ein neues Material hinzugenommen. Um trotzdem eine permanente Darstellung mit beispielsweise weißer Symbolik zu garantieren, also auch bei ausgeschalteter Hintergrundbeleuchtung durch die Leuchtmittel 451, 453, wird ein hier weißes Material für die Farbgebung der Symbolik verwendet. Es kann im Bereich der Symbole, ein als kleiner Klotz gespritztes weißes Makrolon® genommen und an die Symbolflächen geknipst, gedrückt, o.ä. werden, sodass das Material möglichst direkt an der Schicht 210 aus mit PMMA/PC überspritzter Folie anliegt, um eine permanente Darstellung zu garantieren. Da das Material nicht, wie zuvor die Lackierung, mit der Folie der Schicht 210 verbunden ist, befindet sich jetzt ein Luftspalt 226, 526 zwischen den beiden Materialien. Dies führt zur Totalreflexion der Lichtstrahlen an den frei gelaserten Symbolen, wobei die Lichtstrahlen somit bis zum äußeren Bereich des Displays bzw. der Symboleinlage oder Ähnlichem reflektiert werden und somit nicht sichtbar verloren gehen, wie es in Fig. 5 gezeigt ist.

Die Überstrahlung von Symbol zu Symbol ist somit zum größten Teil aufgehoben bzw. nicht sichtbar und kaum messbar.

Alternativ kann durch ein Montage-Spritzgieß-Verfahren, die beispielsweise weiße Komponente, also hier die Diffusorelemente 224, 524, hinterspritzt werden. Durch geschickte Wahl der Werkstoffe bleibt die weiße Komponente in Form des Diffusorelements 224, 524, beispielsweise aus PC/PMMA, am Trägermaterial, beispielsweise ABS (Acrylnitril-Butadien-Styrol), des Zwischenelements 220 haften. Weiterhin entfällt durch das Schwinden die Haftung an der zu durchleuchtenden Folie, beispielsweise aus PMMA/PC im Bereich der Symbolflächen. Hierbei entsteht ein Luftspalt 226, 526, der wie oben beschrieben, an der Totalreflexion des Lichtes mitwi rkt.

Als Materialkombinationen, zum Bilden des Spalts 226, 526 einerseits und zum Herstellen einer sicheren Befestigung des Diffusorelements 224, 524 in dem Lichtschacht 222, 422, 522, 523 andererseits, eignen sich beispielsweise als erste Komponente Materialien wie ABS/PS (PS = Polystyrol), PA6, PA6.6 (Polyamid) oder PC und als zweite Komponente PMMA. Die Kombination aus ABS und PMMA ergibt eine gute Haftung. Die Kombinationen aus den übrigen Materialien mit PMMA ergibt keine Haftung.

Durch den beschriebenen Ansatz kann verhindert werden, dass bei gleichfarbiger Spot- und Grundausleuchtung die Grundausleuchtung der grundausgeleuchteten Symbole durch eine Überstrahlung von einer Spotausleuchtung eines Symbols inhomogen wird. Auch kann vermieden werden, dass bei unterschiedlichen Farben der Spot- und Grundbeleuchtung durch diese Überstrahlung eine deutlich erkennbare Farbverfälschung der grundausgeleuchteten Symbole entsteht.

Fig. 6 zeigt ein Ablaufdiagramm eines Verfahrens zum Herstellen einer Vorrichtung zur Anzeige zumindest eines Symbols gemäß einem Ausführungsbeispiel der vorliegenden Erfindung. Beispielsweise kann unter Verwendung des Verfahrens eine Vorrichtung hergestellt werden, wie sie anhand der vorangegangenen Figuren beschrieben ist.

In einem Schritt 671 wird eine Anordnung aus einer lichtdurchlässigen Kunststoffschicht mit einer lichtundurchlässigen Beschichtung sowie einer lichtundurchlässigen Zwischenkomponente bereitgestellt. Dabei ist von der lichtundurchlässigen Beschichtung zumindest eine Symbolfläche für zumindest ein von der Vorrichtung anzuzeigendes Symbol ausgespart. Die Zwischenkomponente ist außerhalb der zumindest einen Symbolfläche und die zumindest eine Symbolfläche umgebend auf der lichtundurchlässigen Beschichtung angeordnet und bildet zumindest einen an die zumindest eine Symbolfläche angrenzenden Lichtschacht.

In einem Schritt 673 wird ein Diffusorelement in den Lichtschacht oder je ein Diffusorelement in jeden der Lichtschächte angeordnet, wobei ein Spalt zwischen Diffusorelement und Symbolfläche verbleibt.

Gemäß einem Ausführungsbeispiel wird im Schritt 671 des Bereitstellens zunächst die Kunststoffschicht bereitgestellt und anschließend mit der lichtundurchlässigen Beschichtung beschichtet. Danach wird die zumindest eine Symbolfläche durch Entfernen eines Teils der lichtundurchlässigen Beschichtung freigelegt. Anschließend wird die Zwischenkomponente auf die lichtundurchlässige Beschichtung aufgebracht, beispielsweise durch Aufspritzen.

Gemäß einem Ausführungsbeispiel wird im Schritt 673 des Anordnens in jeden Lichtschacht ein bereits ausgeformtes Diffusorelement eingeführt und befestigt. Alternativ wird im Schritt 673 des Anordnens ein Diffusorelement bildendes Material auf die Symbolfläche eines jeden Lichtschachts aufgebracht, um das Diffusorelement auszuformen. Das Aufbringen des Materials kann durch einen Spritzvorgang ausgeführt werden. Dabei wird eine Materialkombination zwischen dem Material für das Diffusorelement und einem Material für die Zwischenkomponente so gewählt, dass das fertig geformte Diffusorelement an der Zwischenkomponente haften bleibt. Eine Materialkombination zwischen dem Material für das Diffusorelement und einem Material für die Symbolfläche wird dagegen so gewählt, dass das fertig geformte Diffusorelement an der Symbolfläche nicht haften bleibt, sodass der Spalt zwischen dem Diffusorelement und der Symbolfläche entsteht.

Fig. 7 zeigt ein Ablaufdiagramm eines Verfahrens zum Anzeigen zumindest eines Symbols gemäß einem Ausführungsbeispiel der vorliegenden Erfindung. Das Verfahren kann beispielsweise im Zusammenhang mit der beschriebenen Vorrichtung ausgeführt werden.

Dabei wird in einem Schritt 771 Licht unter Verwendung eines Diffusorelements in ein diffuses Licht gewandelt und anschließend in einem Schritt 773 durch einen Spalt auf eine Symbolfläche zum Anzeigen des Symbols geleitet. Die Symbolfläche kann als eine lichtdurchlässige Fläche innerhalb einer lichtundurchlässigen umgebenden Fläche ausgeführt sein.

In dem Schritt 771 kann unter Verwendung des Diffusorelements eine Lichtfarbe des Lichts angepasst werden, um das Symbol in einer gewünschten Lichtfarbe anzeigen zu können.

Anstelle des Schritts 771 kann durch die Symbolfläche und den Spalt auf das Diffusorelement einfallende Licht von dem Diffusorelement durch den Spalt und die Symbolfläche hindurch zurückreflektiert werden, um das Symbol bei ausgeschalteter Hintergrundbeleuchtung anzuzeigen. Dabei kann wiederum unter Verwendung des Diffusorelements eine Lichtfarbe des Lichts angepasst werden, um das Symbol in einer gewünschten Lichtfarbe anzeigen zu können.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Vorrichtung
- 102: Fahrzeug
- 104: Getriebe
- 106: Schaltvorrichtung

- 210: Kunststoffschicht
- 212: Hartstoffbeschichtung
- 214: lichtundurchlässige Beschichtung
- 216: Symbolfläche
- 220: Zwischenkomponente
- 222: Lichtschacht
- 224: Diffusorelement
- 226: Spalt
- 232: Licht
- 234: diffuses Licht

- 316: weitere Symbolfläche
- 317: weitere Symbolfläche
- 318: weitere Symbolfläche

- 400: Vorrichtung
- 422: weiterer Lichtschacht
- 435: Leiterplatte
- 441: Farbschicht
- 443: weitere Farbschicht
- 445: Abstrahlcharakteristik
- 447: weitere Abstrahlcharakteristik
- 451: Leuchtmittel
- 453: weiteres Leuchtmittel

- 522: weiterer Lichtschacht
- 523: weiterer Lichtschacht
- 524: weiteres Diffusorelement
- 526: weiterer Spalt
- 561: Abstrahlcharakteristik

- 671: Schritt des Bereitstellens
- 673: Schritt des Anordnens

- 771: Schritt des Wandelns
- 773: Schritt des Leitens

## Patentansprüche

1. Vorrichtung (100) für ein Fahrzeug (102) zur Anzeige zumindest eines Symbols, wobei die Vorrichtung (100) die folgenden Merkmale aufweist:
eine lichtdurchlässige Kunststoffschicht (210) mit einer lichtundurchlässigen Beschichtung (214), wobei eine Symbolfläche (216) für ein von der Vorrichtung (100) anzuzeigendes Symbol von der lichtundurchlässigen Beschichtung (214) ausgespart ist; und
eine lichtundurchlässige Zwischenkomponente (220), die außerhalb der Symbolfläche (216) und die Symbolfläche (216) umgebend auf die lichtundurchlässige Beschichtung (214) aufgebracht ist und einen an die Symbolfläche (216) angrenzenden Lichtschacht (222) bildet,
**dadurch gekennzeichnet, dass**
ein Diffusorelement (224), das innerhalb des Lichtschachts (222) und durch einen Spalt (226) beabstandet zu der Symbolfläche (216) angeordnet ist und ausgebildet ist, um auf das Diffusorelement (224) einfallendes Licht (232) in ein diffuses Licht (234) zum Ausleuchten der Symbolfläche (216) zu wandeln,
wobei das Diffusorelement (224) als ein Element ausgeführt ist, das aus auf die Symbolfläche (216) in den Lichtschacht (222) eingespritztem Material hergestellt ist, wobei das Material eine Eigenschaft aufweist, die beim Aushärten des Materials zu einer dauerhaften Haftung des Materials an der Zwischenkomponente (220) und zum Ausbilden des Spalts (226) zu einer schwindenden Haftung an der Symbolfläche (216) führt.

2. Vorrichtung (100) gemäß Anspruch 1, **dadurch gekennzeichnet, dass** der Spalt (226) mit einem Medium gefüllt ist, das ein Übertreten von innerhalb der lichtdurchlässigen Kunststoffschicht (210) reflektiertem Licht in den Spalt (226) verhindert.

3. Vorrichtung (100) gemäß einem der vorangegangenen Ansprüche, **dadurch gekennzeichnet, dass** der Spalt (226) mit Luft gefüllt ist.

4. Vorrichtung (100) gemäß einem der vorangegangenen Ansprüche, **dadurch gekennzeichnet, dass** das Diffusorelement (224) Farbmittel umfasst.

5. Vorrichtung gemäß einem der vorangegangenen Ansprüche, **dadurch gekennzeichnet, dass** die lichtdurchlässige Kunststoffschicht (210) aus einem synthetischen Polymer oder einem thermoplastischen Kunststoff hergestellt ist.

6. Vorrichtung (100) gemäß einem der vorangegangenen Ansprüche, **dadurch gekennzeichnet, dass** die lichtundurchlässige Beschichtung (214) eine schwarze Lackschicht ist, die auf eine Oberfläche der Kunststoffschicht (210) aufgebracht ist.

7. Vorrichtung (100) gemäß einem der vorangegangenen Ansprüche, **dadurch gekennzeichnet, dass** ein Leuchtmittel (451) zum Ausstrahlen des auf das Diffusorelement (224) einfallenden Lichts (232) auf einer der Kunststoffschicht (210) abgewandten Seite des Diffusorelements (224) angeordnet ist.

8. Vorrichtung (100) gemäß einem der vorangegangenen Ansprüche, **dadurch gekennzeichnet, dass** eine weitere Symbolfläche (318) für ein weiteres anzuzeigendes Symbol von der lichtundurchlässigen Beschichtung (214) ausgespart ist, die lichtundurchlässige Zwischenkomponente (220) außerhalb der weiteren Symbolfläche (318) und die weitere Symbolfläche (318) umgebend auf die lichtundurchlässige Beschichtung (214) aufgebracht ist und einen an die weitere Symbolfläche (318) angrenzenden weiteren Lichtschacht (422) bildet und ein weiteres Diffusorelement (524) innerhalb des weiteren Lichtschachts (422) und durch einen weiteren Spalt (526) beabstandet zu der weiteren Symbolfläche (318) angeordnet ist und ausgebildet ist, um auf das weitere Diffusorelement (524) einfallendes Licht in ein diffuses Licht zum Ausleuchten der weiteren Symbolfläche (318) zu wandeln.

9. Schaltvorrichtung (106) zum Schalten eines Fahrzeuggetriebes (104), **dadurch gekennzeichnet, dass** die Schaltvorrichtung (106) eine Vorrichtung (100) gemäß einem der vorangegangenen Ansprüche zum Anzeigen einer eingestellten Betriebsstufe des Fahrzeuggetriebes (104) aufweist.

10. Verfahren zum Herstellen einer Vorrichtung (100) für ein Fahrzeug (102) zur Anzeige zumindest eines Symbols, wobei das Verfahren die folgenden Schritte umfasst:
Bereitstellen (671) einer Anordnung aus einer lichtdurchlässigen Kunststoffschicht (210) mit einer lichtundurchlässigen Beschichtung (214), wobei eine Symbolfläche (216) für ein von der Vorrichtung (100) anzuzeigendes Symbol von der lichtundurchlässigen Beschichtung (214) ausgespart ist sowie einer lichtundurchlässigen Zwischenkomponente (220), die außerhalb der Symbolfläche (216) und die Symbolfläche (216) umgebend auf der lichtundurchlässigen Beschichtung (214) angeordnet ist, und einen an die Symbolfläche (216) angrenzenden Lichtschacht (222) bildet; **gekennzeichnet durch** das Anordnen (673) eines Diffusorelements (224) innerhalb des Lichtschachts (222) und durch einen Spalt (226) beabstandet zu der Symbolfläche (216), wobei das Diffusorelement (224) ausgebildet ist, um auf das Diffusorelement (224) einfallendes Licht (232) in ein diffuses Licht (234) zum Ausleuchten der Symbolfläche (216) zu wandeln, wobei im Schritt (673) des Anordnens Material zum Ausbilden des Diffusorelements (224) auf die Symbolfläche (216) in den Lichtschacht (222) gespritzt wird, wobei das Material eine Eigenschaft aufweist, die beim Aushärten des Materials zu einer dauerhaften Haftung des Materials an der Zwischenkomponente (220) und zum Ausbilden des Spalts (226) zu einer schwindenden Haftung an der Symbolfläche (216) führt.

## Claims

1. Device (100) for a vehicle (102) for displaying at least one symbol, the device (100) having the following features:
a translucent plastic layer (210) with a non-translucent coating (214), wherein a symbol face (216) for a symbol to be displayed by the device (100) is cut out from the non-translucent coating (214), and
a non-translucent intermediate component (220), which is applied to the non-translucent coating (214) outside the symbol face (216) and around the symbol face (216) and forms a light shaft (222) adjoining the symbol face (216),
**characterized in that**
a diffuser element (224), which is arranged inside the light shaft (222) and spaced apart from the symbol face (216) by a gap (226) and is designed to convert light (232) which is incident on the diffuser element (224) into a diffuse light (234) for illuminating the symbol face (216),
wherein the diffuser element (224) is designed as an element that is produced from material injected into the light shaft (222) onto the symbol face (216), wherein the material has a characteristic which, when curing the material, results in a durable bond of the material on the intermediate component (220) and, for forming the gap (226), results in a decreasing bond on the symbol face (216).

2. Device (100) according to Claim 1, **characterized in that** the gap (226) is filled with a medium that prevents light reflected within the translucent plastic layer (210) from passing over into the gap (226).

3. Device (100) according to one of the preceding claims, **characterized in that** the gap (226) is filled with air.

4. Device (100) according to one of the preceding claims, **characterized in that** the diffuser element (224) comprises colouring agents.

5. Device (100) according to one of the preceding claims, **characterized in that** the translucent plastic layer (210) is produced from a synthetic polymer or a thermoplastic material.

6. Device (100) according to one of the preceding claims, **characterized in that** the non-translucent coating (214) is a black lacquer coat, which is applied to a surface of the plastic layer (210).

7. Device (100) according to one of the preceding claims, **characterized in that** a lighting means (451) for radiating the light (232) which is incident on the diffuser element (224) is arranged on a side of the diffuser element (224) facing away from the plastic layer (210).

8. Device (100) according to one of the preceding claims, **characterized in that** a further symbol face (318) for a further symbol to be displayed is cut out from the non-translucent coating (214), the non-translucent intermediate component (220) is applied outside the further symbol face (318) and around the further symbol face (318) on the non-translucent coating (214) and forms a further light shaft (422) adjoining the further symbol face (318), and a further diffuser element (524) is arranged inside the further light shaft (422) and spaced apart from the further symbol face (318) by a further gap (526) and is designed to convert light which is incident on the further diffuser element (524) into a diffuse light for illuminating the further symbol face (318).

9. Switching device (106) for switching a vehicle transmission (104), **characterized in that** the switching device (106) comprises a device (100) according to one of the preceding claims for displaying a set operating stage of the vehicle transmission (104).

10. Method for producing a device (100) for a vehicle (102) for displaying at least one symbol, the method comprising the following steps:
providing (671) an arrangement consisting of a translucent plastic layer (210) with a non-translucent coating (214), wherein a symbol face (216) for a symbol to be displayed by the device (100) is cut out from the non-translucent coating (214), and of a non-translucent intermediate component (220), which is arranged outside the symbol face (216) and around the symbol face (216) on the non-translucent coating (214) and forms a light shaft (222) adjoining the symbol face (216);
**characterized by**
arranging (673) a diffuser element (224) inside the light shaft (222) and spaced apart from the symbol face (216) by a gap (226), wherein the diffuser element (224) is designed to convert light (232) which is incident on the diffuser element (224) into a diffuse light (234) for illuminating the symbol face (216),
wherein, in the arranging step (673), material for forming the diffuser element (224) is injected into the light shaft (222) onto the symbol face (216), wherein the material has a characteristic which, when curing the material, results in a durable bond of the material on the intermediate component (220) and, for forming the gap (226), results in a decreasing bond on the symbol face (216).

## Revendications

1. Ensemble (100) pour véhicule (102), destiné à afficher au moins un symbole, l'ensemble (100) présentant les caractéristiques suivantes :
une couche (210) de matière synthétique transparente dotée d'un revêtement opaque (214), une surface (216) de symbole étant découpée dans le revêtement opaque (214) pour un symbole à afficher par le dispositif (100) et
un composant intermédiaire opaque (220), appliqué sur le revêtement opaque (214) à l'extérieur de la surface (216) du symbole et autour de la surface (216) du symbole et formant un puits (222) de lumière adjacent à la surface (216) du symbole,
**caractérisé en ce que**
un élément diffuseur (224) disposé à l'intérieur du puits (222) de lumière et maintenu à distance de la surface (216) du symbole par un interstice (226) est formé pour convertir la lumière (232) incidente sur l'élément diffuseur (224) en une lumière diffuse (234) qui éclaire la surface (216) du symbole,
**en ce que** l'élément diffuseur (224) est configuré comme élément réalisé en un matériau injecté dans le puits (222) de lumière sur la surface (216) du symbole, le matériau présentant une propriété qui, lors du durcissement du matériau, entraîne une adhérence durable du matériau sur le composant intermédiaire (220) et, pour la formation de l'interstice (226), une adhérence réduite sur la surface (216) du symbole.

2. Ensemble (100) selon la revendication 1, **caractérisé en ce que** l'interstice (226) est rempli d'un fluide qui empêche que la lumière réfléchie à l'intérieur de la couche (210) de matière synthétique transparente pénètre dans l'interstice (226).

3. Ensemble (100) selon l'une des revendications précédentes, **caractérisé en ce que** l'interstice (226) est rempli d'air.

4. Ensemble (100) selon l'une des revendications précédentes, **caractérisé en ce que** l'élément diffuseur (224) comprend des agents colorés.

5. Ensemble selon l'une des revendications précédentes, **caractérisé en ce que** la couche (210) de matière synthétique transparente est réalisée en un polymère synthétique ou une matière synthétique thermoplastique.

6. Ensemble (100) selon l'une des revendications précédentes, **caractérisé en ce que** le revêtement (214) opaque est une couche de vernis noir appliquée sur une surface de la couche (210) de matière synthétique.

7. Ensemble (100) selon l'une des revendications précédentes, **caractérisé en ce qu'**un moyen d'éclairage (451) qui émet la lumière (232) incidente sur l'élément diffuseur (224) est disposé sur un côté de l'élément diffuseur (224) non tourné vers la couche (210) de matière synthétique.

8. Ensemble (100) selon l'une des revendications précédentes, **caractérisé en ce qu'**une autre surface de symbole (318) prévue pour un autre symbole à afficher est découpée dans le revêtement opaque (214), **en ce que** le composant intermédiaire (220) opaque est appliqué sur le revêtement opaque (214) à l'extérieur d'une autre surface de symbole (318) et autour de l'autre surface de symbole (318) et forme un autre puits de lumière (422) adjacent à l'autre surface de symbole (318), un autre élément diffuseur (524) étant disposé et formé à l'intérieur de l'autre puits de lumière (422) et maintenu à distance de l'autre surface de symbole (318) par un autre interstice (526) pour convertir la lumière incidente sur l'autre élément diffuseur (524) en une lumière diffuse qui éclaire l'autre surface de symbole (318).

9. Ensemble (106) de changement de rapport destiné à changer les rapports de la transmission (104) d'un véhicule, **caractérisé en ce que** l'ensemble (106) de changement de rapport présente un ensemble (100) selon l'une des revendications précédentes pour afficher le rapport de transmission établi dans la transmission (104) du véhicule.

10. Procédé de fabrication d'un ensemble (100) pour véhicule (102), destiné à afficher au moins un symbole, le procédé présentant les étapes suivantes :
préparer (671) un ensemble constitué d'une couche (210) de matière synthétique transparente dotée d'un revêtement opaque (214), une surface (216) d'un symbole étant découpée dans le revêtement opaque (214) pour un symbole à afficher par l'ensemble (100), et d'un composant opaque (220) disposé sur le revêtement opaque (214) à l'extérieur de la surface de symbole (216) et autour de la surface de symbole (216) pour former un puits de lumière (222) adjacent à la surface (216) du symbole,
**caractérisé par**
l'agencement (673) à l'intérieur du puits (222) de lumière d'un élément diffuseur (224) maintenu à distance de la surface (216) du symbole par un interstice (226), l'élément diffuseur (224) étant configuré pour convertir la lumière (232) incidente sur l'élément diffuseur (224) en une lumière diffuse (234) qui éclaire la surface (216) du symbole,
dans lequel à l'étape (673), un matériau de formation de l'élément diffuseur (224) sur la surface (216) de symbole est injecté dans le puits (222) de lumière, le matériau présentant une propriété qui, lors du durcissement du matériau, conduit à une adhérence durable du matériau sur le composant intermédiaire (220) et, pour former l'interstice (226), à une adhérence réduite à la surface (216) du symbole.
